# FASCICULE DE BREVET EUROPEEN

(11) **EP 3 410 857 B1**
(45) Date de publication et mention de la délivrance du brevet: **04.09.2019**
(21) Numéro de dépôt: 17706698.2
(22) Date de dépôt: 02.02.2017
(51) Int. Cl.: A21B 1/44

(54) **DISPOSITIF DE CUISSON INDIVIDUALISÉE DE PLUSIEURS PRÉPARATIONS CULINAIRES, PROCÉDÉ DE CUISSON DANS UN TEL DISPOSITIF ET UTILISATION D'UN TEL DISPOSITIF**
VORRICHTUNG ZUM INDIVIDUELLEN GAREN VON MEHREREN SPEISEN, VERFAHREN ZUM BACKEN IN EINER SOLCHEN VORRICHTUNG UND VERWENDUNG EINER SOLCHEN VORRICHTUNG
DEVICE FOR INDIVIDUALLY COOKING A PLURALITY OF CULINARY PREPARATIONS, BAKING METHOD IN SUCH A DEVICE AND USE OF SUCH A DEVICE

(30) Priorité: 03.02.2016 FR 1650847
(43) Date de publication de la demande: 12.12.2018
(73) Titulaire: Ekim, 77144 Montevrain (FR)
(72) Inventeur: HAMON, Cyrill, 77144 Montevrain (FR); ROVERSO, Sébastien, 77144 Chalifert (FR); CALVARIN, Faustine, 77184 Emerainville (FR)
(74) Mandataire: IPAZ
(86) Numéro de dépôt international: PCT/EP2017/052237
(87) Numéro de publication internationale: WO 2017/134156

(56) Documents cités:
- WO-A1-2008/098341
- WO-A2-2004/100667
- US-A1- 2014 216 434
- US-A1- 2014 311 355
- US-B1- 6 998 582

## Description

### Domaine technique

La présente invention concerne un dispositif de cuisson de préparations culinaires. Elle concerne aussi un automate pour la confection automatique de préparations culinaires à l'aide d'un tel dispositif, un procédé de cuisson individualisée et simultanée de plusieurs préparations culinaires à l'aide d'un tel dispositif, et l'utilisation du présent dispositif pour la cuisson de pizzas.

La présente invention se situe dans le domaine de la restauration - rapide, artisanale ou quasi-industrielle - et plus particulièrement dans le domaine des dispositifs de cuisson au four.

### Etat de la technique antérieure

De manière connue, des fours comprenant plusieurs sites de cuissons permettent de cuire simultanément plusieurs préparations culinaires. Il s'agit par exemple de fours à pizzas. Dans leur forme la plus simple, ces fours comprennent une chambre de cuisson, une source de chaleur, éventuellement un capteur de température, et des moyens de régulation permettant de réguler la température (moyenne) et/ou la puissance thermique au sein de la chambre de cuisson. L'inconvénient de tels fours est qu'ils ne permettent pas de contrôler localement la température de cuisson au niveau de chaque préparation culinaire déposée dans la chambre de cuisson.

Or la température au sein de la chambre de cuisson peut être non homogène selon le type de source de chaleur utilisée et son implantation à l'intérieure de ladite chambre de cuisson, ce qui peut entraîner une température et/ou une durée de chauffage non adaptée pour certaines préparations et/ou une mauvaise qualité de cuisson. Par ailleurs, les paramètres de durée et de température et/ou de puissance de cuisson peuvent différer d'une préparation culinaire à l'autre, en fonction des ingrédients à cuire, de leur distribution à la surface et/ou à l'intérieur de la préparation culinaire et/ou de la masse et du volume de la préparation. Les fours présentant une unique chambre de cuisson et/ou une unique source de chauffage ne permettent ainsi pas de réaliser des cuissons individualisées des différentes préparations.

On connaît aussi le document WO 2008/098341 A1 qui décrit un four à pizzas comprenant une chambre de cuisson, une source de chauffage principal (un foyer à bois) permettant d'amener la chambre de cuisson à la température désirée, une sole rotative comprenant plusieurs sites de cuisson et, dans un mode de réalisation particulier, des moyens de chauffage situés sur la sole rotative, sous chaque site de cuisson. Le problème technique que cherche à résoudre ce four est de réduire les inhomogénéités de température à l'intérieur de la chambre de cuisson. Ces inhomogénéités sont liées spécifiquement à l'utilisation d'une source de chaleur principale située au centre de ladite chambre de cuisson et créant un gradient de température radial à l'intérieur de celle-ci. Les inhomogénéités de températures (de la sole rotative) sont aussi liées à la présence ou l'absence de pizza sur les sites de cuisson. L'utilisation des moyens de chauffage secondaires situés sur la sole rotative, associés à la source principale de chaleur, pour chauffer l'ensemble de la chambre de cuisson, permet ainsi de mieux contrôler l'homogénéité de la température à l'intérieure de la chambre de cuisson.

Cependant, ce four n'est pas agencé pour contrôler la température individuelle de chaque site de cuisson à l'aide des moyens de chauffage situés sur la sole rotative. Tout au plus, pour une température de cuisson homogène à l'intérieure de la chambre de cuisson, et donc identique sur chaque site de cuisson, la durée de cuisson de chaque pizza située sur les sites de cuisson est adaptée en fonction des recettes.

Ainsi la solution mise en oeuvre dans ce document ne permet pas de cuire simultanément des pizzas à des températures et selon des durées différentes les unes des autres.

Le four à pizza décrit ne permet pas non plus de cuire de manière optimale des pizzas constituées d'ingrédients surgelés déposés sur une pâte fraîche.

En effet, dans ce cas particulier, les apports énergétiques à satisfaire sont très différents pour une cuisson optimale à la fois de la pâte et des ingrédients : la pâte fraîche nécessite une température de cuisson constante, préférentiellement comprise entre 250 et 330°C et une durée de cuisson variant entre 2 et 6 minutes selon la température de cuisson afin de ne pas brûler les couches superficielles de ladite pâte fraîche tout en permettant aux couches plus profondes de cuire et de gonfler durant la cuisson ; en revanche, les ingrédients surgelés déposés à la surface de la pâte fraîche abaissée nécessitent une cuisson en trois étapes successives : au cours d'une première étape, les ingrédients sont d'abord décongelés, puis, au cours d'une seconde étape, l'eau libérée au cours de la première étape est évaporée, et enfin les ingrédients sont cuits au cours d'une troisième étape.

On connait par ailleurs le document US 2014/0311355 A1 qui décrit un four pour la cuisson de pizzas dans une chambre de cuisson comprenant une source de chauffage principale située au milieu de la chambre de cuisson et autour de laquelle tourne une plaque de cuisson sur laquelle des pizzas sont placées. La source de chauffage principale décrite est un brûleur dont la flamme débouchant dans la chambre de cuisson permet d'obtenir un effet de cuisson particulier sur les pizzas qui y sont déposées, comparable à celui d'un gril. Un écran est placé à proximité de ladite flamme afin de limiter l'effet du gril à une sous-région délimitée à l'intérieure de la chambre de cuisson.

Par ailleurs, des sources de chauffage secondaires et indépendantes sont disposées sous la plaque de cuisson afin de compenser les inhomogénéités de température à l'intérieure de la chambre, notamment liées à la géométrie particulière de la source de chauffage principale. Les sources de chauffage secondaires ne sont pas entrainées en rotation autour de la source de chauffage principale. Ce four permet ainsi de cuire simultanément plusieurs pizzas selon un certain régime établi à l'intérieur du four et identique pour toutes les pizzas enfournées. Ce four ne permet pas de cuire lesdites pizzas enfournées selon des cycles (durée, température) de cuisson différents et simultanés.

La présente invention a pour objet de répondre au moins en partie aux problèmes précédents et de conduire en outre à d'autres avantages.

Un autre but de l'invention est de faciliter la cuisson simultanée de plusieurs préparations culinaires en réduisant la surveillance d'un cuisinier.

Un autre but de la présente invention est de pouvoir cuire de manière individualisée plusieurs préparations culinaires simultanément dans une même chambre de cuisson.

Un autre but de l'invention est de pouvoir contrôler de manière plus précise la puissance thermique apportée à chaque préparation culinaire au cours de la cuisson.

Un autre but de la présente invention est de pouvoir cuire à l'aide d'un même dispositif et au cours d'un même procédé de cuisson une préparation culinaire composée d'ingrédients surgelés et d'ingrédients réfrigérés.

### Exposé de l'invention

Selon un premier aspect de l'invention, on atteint au moins l'un des objectifs précités avec un dispositif de cuisson de préparation culinaire et comprenant (i) une chambre de cuisson, apte à accueillir simultanément plusieurs préparations culinaires individuelles, (ii) un moyen de chauffage primaire, agencé pour délivrer une puissance thermique, dite primaire, permettant de chauffer la chambre de cuisson - et préférentiellement une partie des préparations culinaires, (iii) un plateau mobile - de préférence en rotation - apte à se déplacer à l'intérieur de la chambre de cuisson, et comprenant une pluralité de sites de cuisson, chacun étant agencé pour recevoir une préparation culinaire, (iv) des moyens de chauffage secondaires, comportant une pluralité d'éléments chauffants, situés au dessus du plateau mobile et aptes à se déplacer - de préférence en rotation - à l'intérieur de la chambre de cuisson de manière à suivre un déplacement du plateau mobile, chaque élément chauffant étant associé à l'un des sites de cuisson et étant agencé pour délivrer une puissance thermique dite secondaire permettant de chauffer préférentiellement le dessus de ce site de cuisson.

Conformément au premier aspect de l'invention, la chambre de cuisson est agencée pour permettre d'y déposer plusieurs préparations culinaires afin de les cuire simultanément. Les dimensions de la chambre de cuisson sont conditionnées par le débit de cuisson désiré. L'invention est principalement destinée à des structures de restauration artisanale ou semi-industrielle dans lesquelles les préparations culinaires fabriquées sont destinées à être consommées rapidement après leur fabrication, sur place ou à emporter. De manière non limitative, la présente invention vise ainsi à cuire de manière préférentielle entre quatre et huit préparations culinaires en même temps, par exemple six préparations culinaires.

De manière préférentielle, le dispositif de cuisson selon le premier aspect de l'invention est utilisé pour la cuisson des pizzas, quiches, tartes ou gâteaux.

Le moyen de chauffage primaire est agencé pour chauffer l'intérieur de la chambre de cuisson afin de la porter à une température prédéterminée et compatible avec la cuisson des préparations culinaires présentes dans ladite chambre de cuisson. Typiquement, les températures de fonctionnement sont comprises entre 150°C et 450°C.

Le moyen de chauffage primaire peut être de tout type connu, mais selon un mode de réalisation préférentiel, il comprend au moins une résistance électrique disposée à l'intérieur de la chambre de cuisson. Afin de fournir une puissance thermique la plus homogène possible et garantir une température homogène à l'intérieur de la chambre de cuisson, l'au moins une résistance électrique peut s'étendre le long d'une surface d'appui à l'intérieur de la chambre de cuisson, comme par exemple la surface inférieure de ladite chambre et/ou l'une au moins des surfaces latérales et/ou la surface supérieure. A titre d'exemples non limitatifs, la résistance électrique peut, de manière connue, prendre la forme d'un serpentin s'enroulant sur lui-même de manière concentrique ou alors décrire une pluralité de créneaux entre deux extrémités opposées de ladite chambre de cuisson.

De manière préférentielle, le moyen de chauffage primaire comprend une résistance électrique située sous le plateau mobile supportant les préparations culinaires. Elle s'étend latéralement d'une part entre les faces latérales de la chambre de cuisson et d'autre part entre les faces avant et arrière de ladite chambre de cuisson. Il est ainsi possible à la fois de chauffer la chambre de cuisson de manière homogène par convection et d'apporter de manière préférentielle une puissance thermique par radiation à la surface du dessous du plateau mobile. Les préparations culinaires étant disposées sur la surface supérieure dudit plateau mobile, cette disposition avantageuse permet d'orienter préférentiellement une partie du chauffage généré par une telle résistance électrique pour la cuisson de la partie inférieure de ladite préparation culinaire, typiquement la pâte dans le cas d'une pizza.

Le moyen de chauffage primaire peut comprendre en outre une seconde résistance électrique située au-dessus du plateau mobile. Cette seconde résistance électrique peut prendre une forme similaire à celle de la première résistance électrique placée sous le plateau mobile.

Selon le premier aspect de l'invention, le plateau mobile du dispositif de cuisson permet notamment de déplacer les préparations culinaires à l'intérieur de la chambre de cuisson afin de mieux contrôler leur cuisson. En effet, dans le cas où une « zone froide » serait présente dans la chambre de cuisson, par exemple par la défaillance du moyen de chauffage primaire, alors le déplacement des préparations culinaires dans la chambre permet de répartir le déficit énergétique thermique sur toutes les préparations culinaires qui traversent alors temporairement la « zone froide ». Par ailleurs, le déplacement du plateau mobile à l'intérieur de la chambre de cuisson rend possible un enfournement de toutes les préparations culinaires à l'intérieur de la chambre de cuisson depuis une seule zone, quel que soit le site de cuisson.

De manière avantageuse, la présente invention met en oeuvre un déplacement en rotation du plateau mobile, l'axe de rotation étant préférentiellement situé au centre de ladite chambre de cuisson et selon une direction sensiblement verticale et perpendiculaire à la surface du plateau. Le plateau mobile est entrainé en rotation par le biais d'un moteur d'entrainement, par exemple de type moteur pas-à-pas.

Selon le premier aspect de l'invention, le dispositif comprend des moyens de chauffage secondaires, comportant une pluralité d'éléments chauffants situés au-dessus du plateau de manière à chauffer préférentiellement la surface du dessus d'une préparation culinaire placée sur l'un des sites de cuisson du plateau.

Préférentiellement, le dispositif comprend autant d'éléments chauffants que de sites de cuissons, chaque élément chauffant étant situé à l'aplomb du site de cuisson auquel il est associé.

Les éléments chauffants sont agencés pour suivre le déplacement du plateau mobile de sorte qu'à chaque instant, chaque élément chauffant se situe au-dessus du site de cuisson auquel il est associé. Les éléments chauffants et le plateau mobile peuvent être entraînés par des moyens d'entraînement communs ou distincts. Dans ce dernier cas, les moyens d'entraînement sont pilotés par une même unité de commande, également appelée contrôleur. À titre d'exemple, le plateau mobile et les éléments chauffants peuvent être agencés pour être entrainés en rotation à l'intérieur de la chambre de cuisson. Cette mise en rotation peut se faire par le biais d'un arbre commun pour le plateau mobile et les éléments chauffants. Alternativement, la rotation peut être effectuée par l'intermédiaire d'éléments moteurs particuliers et distincts pour le plateau mobile et les éléments chauffants. De cette manière, chaque élément chauffant chauffe principalement une (et préférentiellement une seule) préparation culinaire : celle qui est située juste en dessous.

Ainsi, les moyens de chauffage secondaires permettent d'apporter une puissance thermique complémentaire à celle apportée par le moyen de chauffage primaire. Ils permettent en outre d'apporter une puissance thermique localisée et spécifique à chaque site de cuisson, permettant ainsi de cuire différemment les préparations culinaires placées sur chaque site de cuisson.

Dans une variante de réalisation de la présente invention, la chambre de cuisson peut prendre la forme d'un four-tunnel et le plateau mobile peut comprendre un ou plusieurs tapis de convoyage agencé(s) pour translater une ou plusieurs préparations culinaires à l'intérieur de la chambre de cuisson et entre deux faces opposées. Les préparations culinaires peuvent alors être réparties sur les différentes lignes de cuisson en fonction de l'avancement du/des tapis de convoyage, ainsi que le long de chaque ligne de cuisson. Plusieurs préparations culinaires peuvent alors être enfournées « de front ». En d'autres termes, les préparations culinaires peuvent être disposées sur des sites de cuissons répartis selon un réseau bidimensionnel à l'intérieur de la chambre de cuisson. La longueur de la chambre de cuisson et/ou la vitesse d'avancement du/des tapis de convoyage sont agencées pour que les préparations culinaires déposées à l'entrée de la chambre de cuisson soient cuites lorsqu'elles parviennent à la sortie (située sur la face opposée de la chambre de cuisson).

Le moyen de chauffage primaire est alors situé préférentiellement sous le(s) tapis de convoyage, de manière à chauffer le plus uniformément possible la chambre de cuisson, à la fois dans le sens d'avancement du tapis de convoyage et aussi latéralement.

Les moyens de chauffage secondaires sont préférentiellement situés au-dessus du tapis de convoyage des préparations culinaires, organisés en un réseau bidimensionnel d'éléments chauffants de manière à ce que chaque préparation culinaire placée sur le tapis de convoyage soit surplombée par un élément chauffant, malgré l'avancement du/des tapis de convoyage. En d'autres termes, les éléments chauffants sont agencés selon un réseau bidimensionnel comparable à celui des sites de cuisson, de manière à ce que chaque site de cuisson traversant la chambre de cuisson soit surplombé par un élément chauffant.

De manière astucieuse, le dispositif de cuisson selon cette variante de réalisation permet de cuire des préparations culinaires avec des températures différentes, chaque ligne d'éléments chauffants étant par exemple programmée pour un cycle de cuisson particulier correspondant à une recette particulière. Il est notamment possible de définir des durées de cuisson différentes pour chaque tapis de convoyage en modulant leur vitesse de défilement à l'intérieur de la chambre de cuisson. A titre d'exemple non limitatif, le contrôleur peut être programmé pour que la vitesse de défilement d'un premier tapis de convoyage - et le cas échéant celle du convoyeur déplaçant les éléments chauffants correspondants - corresponde à une cuisson de la préparation culinaire en deux minutes quarante secondes, tandis que celle d'un deuxième tapis de convoyage - et le cas échéant celle du convoyeur transportant les éléments chauffants correspondants - corresponde à une durée de traversée de ladite chambre de cuisson en trois minutes cinquante secondes.

Les moyens de chauffage secondaires sont entrainés en translation par un convoyeur, afin de suivre le mouvement de la préparation culinaire lorsqu'elle traverse la chambre de cuisson pour être cuite. A la sortie de la chambre de cuisson, les éléments chauffants sont réacheminés vers l'entrée par le ou les convoyeurs. Le réseau bidimensionnel d'éléments chauffants permet d'assurer une cuisson individualisée à l'intérieur de la chambre de cuisson avec un rendement très élevé.

Selon un perfectionnement avantageux de cette variante de réalisation, chaque ligne de cuisson peut être définie à l'aide d'un tapis de convoyage indépendant et/ou être préférentiellement réservée à un type particulier de préparation culinaire ou de cuisson.

Une partie de l'énergie thermique produite par un élément chauffant associé à un site de cuisson peut éventuellement atteindre un ou plusieurs autres sites de cuisson adjacents. Cependant, pour un site de cuisson donné, l'énergie reçue de la part des autres éléments chauffants est négligeable par rapport à celle apportée par l'élément chauffant qui lui est associé. A titre d'exemple elle est préférentiellement inférieure à 20% de l'énergie reçue par l'élément chauffant associé au site de cuisson.

Avantageusement, le moyen de chauffage primaire peut délivrer une puissance nominale de 7 kW pour toute la chambre de cuisson tandis que chaque élément chauffant peut délivrer une puissance nominale de 1 kW.

De manière préférentielle, le type, les dimensions, la forme et le positionnement des éléments chauffants sont choisis de manière à ce que chaque élément chauffant apporte une énergie thermique localisée sur le site de cuisson correspondant, sans influencer la cuisson de la préparation culinaire située sur le site de cuisson adjacent. Il est en outre préférable de choisir des éléments chauffants de type rayonnant, de sorte que la puissance thermique produite soit principalement transmise par rayonnement plutôt que par convection. Par ailleurs, il est aussi préférable de choisir des éléments chauffants dont l'étendue est avantageusement inférieure ou égale à la surface occupée par la préparation culinaire située en dessous. A titre d'exemple non limitatif, un moyen de chauffage secondaire peut prendre la forme d'une résistance électrique en forme de spirale dont le diamètre extérieur est inférieur ou égal aux dimensions latérales de la préparation culinaire correspondante.

Selon une particularité de l'invention, le dispositif comprend par ailleurs un contrôleur programmé pour réguler séparément le moyen de chauffage primaire et chaque élément chauffant des moyens de chauffage secondaires. Il est ainsi possible de contrôler précisément la puissance thermique de chaque moyen de chauffage afin de l'ajuster précisément à la préparation culinaire correspondante et de cuire de manière individualisée plusieurs préparations culinaires simultanément. De cette manière, les risques de rater la cuisson des préparations culinaires présentes dans la chambre de cuisson sont diminués. Il est aussi possible de définir ainsi des cycles de cuisson comprenant des puissances thermiques et des durées particulières, un cycle de cuisson pouvant comprendre plusieurs phases de durées et/ou puissances variables. Par ailleurs, le dispositif de cuisson selon ce perfectionnement permet de cuire des préparations culinaires composées d'ingrédients surgelés et d'ingrédients frais par exemple, pour lesquels les apports énergétiques nécessaires à l'obtention d'une cuisson optimale sont différents. Dans le cas particulier, donné à titre d'exemple non limitatif, de la cuisson d'une pizza dont la pâte est fraîche et les ingrédients déposés à sa surface sont congelés, alors les éléments chauffants peuvent être commandés à une puissance de chauffage telle qu'elle permet une décongélation optimale, tandis que la cuisson de la pâte, majoritairement déterminée par le moyen de chauffage primaire, peut être assurée de manière quasi-indépendante.

Plus particulièrement, les moyens de chauffage primaire peuvent être régulés de manière à maintenir une température moyenne de la chambre de cuisson comprise entre 250°C et 330°C afin de cuire la pâte fraîche pendant une durée variant entre 2 et 6 minutes. Les moyens de chauffages secondaires peuvent être contrôlés au travers de trois étapes successives, permettant au cours de la première étape de décongeler les ingrédients déposés à la surface de la pâte abaissée, puis au cours de la seconde étape, de faire évaporer l'eau libérée durant la première étape, et enfin de cuire les ingrédients au cours de la troisième étape.

Le contrôleur peut ainsi être programmé pour que, au cours d'un cycle de cuisson d'une préparation culinaire, une puissance de l'élément chauffant associé au site de cuisson recevant la préparation culinaire soit régulée de manière à successivement décongeler des ingrédients de la préparation culinaire, évaporer l'eau issue de la décongélation et cuire la préparation culinaire.

Les températures de chauffage et/ou les durées de chacune des trois étapes peuvent être différentes. Ainsi, de manière typique mais non exclusive, l'étape de décongélation peut s'étendre sur environ un quart de la durée totale de cuisson d'une pizza ; l'étape d'évaporation de l'eau peut s'étendre sur environ la moitié de la durée totale de la cuisson d'une pizza ; et l'étape de cuisson des ingrédients peut s'étendre sur environ un quart de la durée totale de cuisson d'une pizza.

De manière comparable, les puissances de chauffage mises en oeuvre lors de la cuisson d'une pizza peuvent être différentes pour chacune des trois étapes décrites précédemment. Ainsi, de manière typique mais non exclusive, l'étape de décongélation peut mettre en oeuvre une puissance de chauffage de l'ordre de la moitié d'une puissance de référence, par exemple la puissance nominale du moyen de chauffage primaire ; l'étape d'évaporation de l'eau peut mettre en oeuvre une puissance de chauffage comprise entre 1 et 1,5 fois la puissance de référence ; et l'étape de cuisson des ingrédients peut mettre en oeuvre une puissance de chauffage de l'ordre du double de la puissance de référence.

Le moyen de chauffage primaire est avantageusement régulé de manière à ce que la température moyenne de la chambre de cuisson soit maintenue constante par rapport à une consigne fixée.

Les moyens de chauffage secondaire peuvent être contrôlés en puissance thermique rayonnée, ou régulés en fonction d'au moins un capteur placé dans la chambre de cuisson, et plus particulièrement au niveau de chaque site de cuisson. A titre d'exemple non limitatif, un tel capteur peut être un capteur de température, ou un capteur infra-rouge ou encore un capteur optique afin de mesurer l'apparence de la pizza déposée sur le site de cuisson correspondant, la puissance des moyens de chauffage secondaires correspondants étant régulée de manière à suivre par exemple les trois étapes de décongélation, évaporation et cuisson des ingrédients décrites précédemment.

Ainsi, selon un mode de réalisation particulier, le contrôleur peut être programmé pour que, au cours d'un cycle de cuisson d'une préparation culinaire, l'élément chauffant associé au site de cuisson recevant la préparation culinaire fournisse à la préparation culinaire une énergie thermique, dite secondaire, différente de - et préférentiellement comprise entre la moitié de et deux fois supérieure à - une énergie thermique dite primaire fournie à la préparation culinaire par le moyen de chauffage primaire.

Pour ce faire, il est possible par exemple de programmer le contrôleur de manière à ce que, au cours d'un cycle de cuisson d'une préparation culinaire, la puissance thermique secondaire fournie par l'élément chauffant associé au site de cuisson recevant la préparation culinaire soit différente de la puissance thermique primaire fournie par le moyen de chauffage primaire à ladite préparation culinaire, la puissance thermique fournie par l'élément chauffant associé à chaque site de cuisson pouvant varier durant un cycle de cuisson, selon notamment les trois étapes décrites précédemment.

A titre d'exemple non limitatif, le moyen de chauffage primaire peut être contrôlé à 10% de sa puissance nominale afin de faire « monter » et maintenir la chambre de cuisson à une température moyenne de 290 °C +/-40°C. De manière générale, mais non limitative, le moyen de chauffage primaire est régulé à une température ou puissance thermique constante ou quasi constante, l'objectif étant de maintenir une température constante et homogène dans le four pour assurer une cuisson optimale. En revanche, les éléments chauffants des moyens de chauffage secondaires peuvent quant à eux être contrôlés de manière constante ou variable en fonction des préparations culinaires correspondantes et selon des cycles de cuisson prédéfinis. D'une manière générale, chaque élément chauffant est contrôlé entre 5%et 100% de sa puissance nominale.

La régulation de la puissance thermique secondaire émise par chaque élément chauffant peut dépendre de la recette de la préparation culinaire correspondante et/ou de l'état de conservation des ingrédients (frais ou congelés) et/ou selon les trois étapes décrites précédemment (décongélation, évaporation, cuisson). Par exemple des rampes de puissances croissantes ou décroissantes peuvent être réalisées au cours d'un cycle de cuisson afin d'apporter une puissance thermique variable et de cuire de manière optimale la préparation culinaire correspondante.

Une telle différentiation des apports énergétiques réalisés par le moyen de chauffage primaire d'une part et les éléments chauffants d'autre part est particulièrement avantageuse pour la cuisson de pizzas par exemple, pour lesquelles les besoins de cuisson de la pâte et de celle des ingrédients déposés à sa surface ne sont pas toujours identiques.

Plus spécifiquement encore, le dispositif de cuisson selon le premier aspect de l'invention permet de manière astucieuse d'obtenir une cuisson optimale pour des pizzas réalisées à partir de pâte fraîche et de garnitures surgelées. En effet, dans une telle configuration, les apports énergétiques nécessaires à la cuisson optimale d'une telle combinaison sont particulièrement difficiles à satisfaire. La pâte peut cuire rapidement tandis que la garniture déposée à sa surface doit d'abord être décongelée avant d'être cuite : il est donc nécessaire d'apporter un chauffage d'abord faible pour la décongélation de ladite garniture avant d'augmenter la puissance de chauffage afin de faire évaporer l'eau issue de la décongélation et de cuire convenablement ladite garniture.

Ainsi, le dispositif selon la présente invention permet de garantir une cuisson optimale grâce à d'une part le moyen de chauffage primaire situé sous le plateau mobile et permettant notamment de cuire la pâte à température constante, et d'autre part aux éléments chauffants qui, placés au-dessus de chaque site de cuisson, permettent d'apporter une puissance thermique variable adaptée à n'importe quel cycle de cuisson, notamment décongélation puis cuisson. Il est ainsi possible de cuire à l'aide d'un même dispositif et au cours d'un même procédé de cuisson une préparation culinaire composée d'ingrédients surgelés et d'ingrédients réfrigérés. Le dispositif selon l'invention comprenant une pluralité de sites de cuisson, il est ainsi possible de contrôler et réaliser de telles cuissons pour plusieurs préparations culinaires placées dans la chambre de cuisson, chaque préparation culinaire pouvant être cuite selon des cycles de cuisson différents en termes de température et/ou puissance de chauffage et/ou de durée.

De manière avantageuse, le dispositif selon l'une quelconque des variantes du premier mode de réalisation de la présente invention comprend par ailleurs une pluralité de capteurs de température, chaque capteur de température étant associé à un site de cuisson et étant agencé pour mesurer une température, dite locale, au voisinage de ce site de cuisson, le contrôleur étant programmé pour réguler la puissance thermique de l'élément chauffant associé au site de cuisson et/ou le moyen de chauffage primaire en fonction de ladite température locale. Il est ainsi possible de réaliser un asservissement de chaque élément chauffant en fonction de la température mesurée au niveau de chaque site de cuisson correspondant afin de réaliser une cuisson parfaite des préparations culinaires, permettant ainsi de contrôler de manière plus précise encore la puissance thermique apportée à chaque préparation culinaire.

Selon un mode de réalisation particulier, le dispositif peut ne comprendre qu'un seul capteur de température pour mesurer la température de tous les éléments chauffants et/ou les sites de cuisson. Pour ce faire, ledit capteur de température peut être fixé de manière à ne pas être entrainé en rotation par le plateau mobile et/ou les éléments chauffants : alternativement, et de manière cyclique en fonction de la rotation dudit plateau mobile, le capteur de température mesure la température de chauffage à proximité de chaque moyen de chauffage secondaire lorsque ce dernier passe à proximité dudit capteur de température.

Préférentiellement, le dispositif selon l'invention comprend par ailleurs un capteur de température agencé pour mesurer une température, dite d'ensemble, au sein de de la chambre de cuisson, le contrôleur étant programmé en outre pour réguler la puissance thermique du moyen de chauffage primaire et/ou des éléments chauffants en fonction de la température d'ensemble.

De cette manière, il est possible de mieux contrôler la température de la chambre de cuisson, un asservissement de la puissance thermique développée par le moyen de chauffage primaire pouvant être réalisé en fonction des mesures de température dans la chambre de cuisson, et améliorer ainsi la qualité des cuissons des préparations culinaires qui y sont déposées.

De manière particulière, le contrôleur est programmé pour réguler la puissance thermique de chaque élément chauffant des moyens de chauffage secondaires en fonction de la préparation culinaire déposée sur chaque site de cuisson associé.

Certaines préparations culinaires nécessitent une programmation thermique assez simple, pour laquelle la puissance de chauffage est constante durant toute la durée de cuisson. A titre d'exemple, une pizza réalisée selon la recette dite « Reine » nécessite une durée de cuisson de 240 secondes avec une puissance de chauffage des éléments chauffants des moyens de chauffage secondaires de l'ordre de 30% de la puissance nominale desdits éléments chauffants. Une pizza réalisée selon la recette dite « Quatre fromages » nécessite une durée de cuisson de 210 secondes avec une puissance de chauffage des éléments chauffants des moyens de chauffage secondaires de l'ordre de 20% de la puissance nominale desdits éléments chauffant.

En revanche, d'autres préparations culinaires peuvent nécessiter une programmation thermique plus complexe, mettant en oeuvre une succession de plages de chauffage, chaque plage de chauffage étant définie par une puissance de chauffage - et donc de température de cuisson - et une durée particulières, l'ensemble des durées de toutes les plages de chauffage définissant la durée de cuisson desdites préparations culinaires. A titre d'exemple, une pizza réalisée selon la recette dite « Orientale » nécessite une durée de cuisson de 240 secondes au cours de laquelle, durant une première plage de 60 secondes, les éléments chauffants des moyens de chauffage secondaires sont configurés à une puissance de chauffage de l'ordre de 20% de leur puissance nominale ; durant une seconde plage de 120 secondes, les éléments chauffants des moyens de chauffage secondaires sont configurés à une puissance de chauffage de l'ordre de 40% de leur puissance nominale ; et durant une troisième plage de 60 secondes, les éléments chauffants des moyens de chauffage secondaires sont configurés à une puissance de chauffage de l'ordre de 70% de leur puissance nominale.

A titre d'exemple, la puissance d'utilisation des éléments chauffants des moyens de chauffage secondaires est comprise entre 20% et 100% de leur puissance nominale.

Selon une particularité compatible avec n'importe laquelle des variantes du premier mode de réalisation de la présente invention, chaque site de cuisson est agencé pour limiter l'adhérence de la préparation culinaire lors de la cuisson.

D'une manière plus générale, chaque site de cuisson peut être agencé pour permettre le dépôt et la récupération d'une préparation culinaire tout en limitant son déplacement durant la cuisson dans le dispositif selon l'invention et du fait de la rotation du plateau mobile. A titre d'exemples non limitatifs, chaque site de cuisson peut être conçu dans un matériau non adhésif alimentaire, au moins sur une couche superficielle supérieure, ou comprendre un revêtement particulier non adhésif et alimentaire afin de limiter l'adhérence, comme par exemple un revêtement de type TUFRAM®.

Le matériau choisi pour réaliser le site de cuisson doit préférentiellement être un bon conducteur thermique afin de transférer la puissance thermique produite au niveau du moyen de chauffage primaire situé en dessous vers la préparation culinaire correspondante.

De préférence, le matériau choisi est non poreux et facile à nettoyer. Par exemple, il peut s'agir de pierre réfractaire dont les propriétés thermiques sont particulièrement adaptées à ce type de dispositif de cuisson.

De manière préférentielle, chaque site de cuisson présente une surface d'accueil discontinue s'étendant en saillie par rapport au plateau mobile et sur laquelle la préparation culinaire peut être déposée, de manière à permettre la préhension de ladite préparation culinaire par le dessous.

Particulièrement, un site de cuisson peut présenter des ouvertures débouchant sur la surface d'accueil et s'étendant parallèlement à cette surface, de manière à permettre l'insertion d'une pelle en forme de peigne dans lesdites ouvertures, et le soulèvement de la préparation culinaire de la surface d'accueil. En d'autres termes, un site de cuisson peut prendre la forme d'une grille ou de plots formant ainsi une pluralité de structures en saillie(s) localisées et discontinues. L'agencement des plots ou de la grille peut être régulier - l'espace entre deux structures en saillie étant homogène - ou irrégulier, aléatoire.

Cette configuration est particulièrement adaptée à la cuisson de pizzas par exemple, ces dernières étant déposées directement sur une telle surface discontinue. En effet, d'une part cette configuration permet de limiter l'adhérence de la pizza sur le site de cuisson - en limitant la surface de contact avec le dessous de la pâte à pizza. Elle permet aussi de favoriser la cuisson de la pâte de la pizza en laissant l'air présent dans la chambre de cuisson circuler sous ladite pâte à pizza. D'autre part, cette configuration permet d'assurer un parfait maintien de la pizza malgré la rotation du plateau mobile, la pâte à pizza pouvant s'affaisser légèrement entre les surfaces de contact sans pour autant se déchirer et l'empêchant ainsi de subir un mouvement latéral lors de la cuisson.

Selon une autre particularité compatible avec n'importe laquelle des variantes du premier mode de réalisation de la présente invention, le dispositif comprend par ailleurs une porte motorisée, et le contrôleur est programmé en outre pour contrôler l'ouverture et la fermeture de ladite porte motorisée.

Il est ainsi possible de déterminer des paramètres permettant de commander l'ouverture et/ou la fermeture de la porte du dispositif de cuisson de manière automatique, et de permettre de minimiser la perte de chaleur associée aux ouvertures de la porte pour enfourner ou sortir une préparation culinaire du dispositif selon l'invention. Les paramètres de commande peuvent être notamment les instants d'ouverture et/ou de fermeture de la porte. La cuisson des préparations culinaires est ainsi optimisée en garantissant une température la plus constante possible à l'intérieure de la chambre de cuisson - ou conforme à une consigne prédéterminée en fonction des préparations culinaires présentes dans la chambre de cuisson.

Avantageusement, le contrôleur peut être programmé en outre pour adapter la vitesse de rotation et/ou le sens de rotation du plateau mobile et/ou pour réguler le moyen de chauffage primaire et/ou les éléments chauffants des moyens de chauffage secondaires afin de présenter l'un des sites de cuisson à proximité de la porte à la fin d'un cycle de cuisson de la préparation culinaire accueillie par ledit site de cuisson.

Il est ainsi possible de réduire encore plus les temps d'ouverture de la porte et de conserver une température constante à l'intérieure de la chambre de cuisson - ou conforme à une consigne prédéterminée en fonction des préparations culinaires présentes dans la chambre de cuisson.

L'ouverture de la porte peut être déclenchée automatiquement lorsque le site de cuisson supportant la préparation culinaire dont la cuisson arrive à son terme arrive à proximité de la porte. De manière avantageuse, le contrôleur détermine l'instant d'ouverture de la porte en fonction de la durée nécessaire pour que le site de cuisson dont la préparation culinaire est presque cuite soit à proximité de la porte lorsque le cycle de cuisson se termine et adapte la vitesse et/ou le sens de rotation du plateau mobile. Il est ainsi possible de réduire les dimensions de la porte de sorte qu'elles correspondent sensiblement aux dimensions latérales d'un site de cuisson, favorisant ainsi les capacités thermiques de la chambre de cuisson.

Eventuellement, le contrôleur détermine d'une part l'instant d'ouverture de la porte à l'intérieur d'une plage de trois secondes réparties au-delà et endeçà du temps de cuisson prédéterminé . D'autre part, le contrôleur adapte la vitesse de rotation et/ou le sens de rotation du plateau mobile de manière à présenter à proximité de la porte une préparation culinaire dont le cycle de cuisson se termine.

Avantageusement, le plateau mobile n'est pas arrêté lorsqu'une préparation culinaire est déposée ou retirée dudit plateau.

De manière préférentielle, le contrôleur peut être programmé en outre pour adapter la vitesse et/ou le sens de rotation du plateau mobile afin de présenter à proximité de la porte un site de cuisson vide avant l'ouverture de ladite porte. Ainsi, dès que la porte est ouverte, une préparation culinaire peut être immédiatement déposée sur le site de cuisson qui est directement devant - donc le plus accessible, et la durée durant laquelle la porte est ouverte est ainsi minimisée afin de réduire les pertes thermiques, de mieux réguler la température à l'intérieur de la chambre de cuisson et/ou des sites de cuisson.

Selon une particularité, le contrôleur peut aussi être programmé pour déterminer le site de cuisson vide le plus proche du site de cuisson dont la préparation culinaire est la prochaine à atteindre la fin d'un cycle de cuisson et adapter la vitesse de rotation et/ou le sens de rotation du plateau mobile de manière à minimiser la durée durant laquelle la porte est ouverte.

Alternativement, le contrôleur peut aussi être programmé pour présenter à proximité de la porte un site de cuisson vide afin de permettre d'y déposer une préparation culinaire à cuire avant d'adapter la vitesse et/ou le sens de rotation du plateau mobile afin de présenter à proximité de la porte un site de cuisson sur lequel une préparation culinaire est prête à être extraite.

Il est ainsi possible d'optimiser d'une part la gestion des sites de cuisson et d'autre part de minimiser les durées d'ouverture de la porte. Cette optimisation peut se faire au regard des emplacements vides et/ou des durées de cuisson correspondantes aux préparations culinaires à cuire.

Selon un deuxième aspect de la présente invention, il est proposé un procédé d'optimisation de la cuisson d'au moins une préparation culinaire dans un dispositif de cuisson conforme au premier aspect de l'invention ou à l'un de ses perfectionnements, ledit procédé d'optimisation de la cuisson comprenant au moins une itération des étapes suivantes :
- optionnellement : ouverture de la porte ;
- dépôt d'une préparation culinaire sur un site de cuisson libre du plateau mobile, ledit plateau mobile pouvant être en rotation à l'intérieur dudit dispositif de cuisson ;
- optionnellement : fermeture de la porte ;
- commande de l'élément chauffant du moyen de chauffage secondaire associé au site de cuisson en fonction d'un cycle de cuisson dépendant de la préparation culinaire déposée, le cycle de cuisson étant défini par notamment au moins une puissance de chauffage et au moins une durée ;
- à un instant dit d'extraction, situé dans un intervalle compris entre cinq et soixante secondes de la fin du cycle de cuisson, et préférentiellement cinq secondes avant la fin dudit cycle de cuisson :
   - rotation du plateau mobile de manière à présenter le site de cuisson à proximité de la porte ;
   - optionnellement : ouverture de la porte ;
   - extraction de la préparation culinaire ;
   - optionnellement : fermeture de la porte.

De manière avantageuse, le procédé selon le second aspect de l'invention comprend les étapes suivantes lorsqu'une préparation culinaire supplémentaire doit être cuite dans le dispositif de cuisson, les étapes suivantes pouvant être effectuées avant l'extraction d'une préparation culinaire :
- identification d'un premier site de cuisson sur lequel une préparation culinaire est sur le point de terminer son cycle de cuisson. Il peut s'agir de manière préférentielle d'une préparation culinaire dont la durée de cuisson écoulée correspond à 90-100% de la durée totale dudit cycle de cuisson ;
- sélection d'un second site de cuisson vide le plus proche du premier site de cuisson ;
- rotation du plateau mobile de manière à présenter à proximité de la porte le second site de cuisson sélectionné ;
- dépôt de la préparation culinaire supplémentaire sur le site de cuisson vide sélectionné ;
- rotation du plateau mobile de manière à présenter à proximité de la porte le premier site de cuisson, ladite préparation culinaire terminant sont cycle de cuisson pendant ladite rotation ;
- extraction de la préparation culinaire située sur le premier site de cuisson.

Il est ainsi possible de manière astucieuse de limiter les durées d'ouverture de la porte et donc de limiter les pertes de chaleur du dispositif de cuisson selon l'invention.

De manière préférentielle, le procédé conforme à l'un quelconque des perfectionnements du second aspect de l'invention peut comprendre la programmation par le contrôleur de la cuisson d'une préparation culinaire présente sur un site de cuisson d'un dispositif selon l'un des premiers aspects de l'invention et selon :
- un cycle de cuisson constant, la puissance d'un élément chauffant des moyens de chauffage secondaires étant constante durant toute la durée dudit cycle de cuisson ; ou
- un cycle de cuisson par paliers, comprenant une pluralité de paliers durant chacun desquels la puissance d'un élément chauffant des moyens de chauffage secondaires est constante, lesdites puissances pouvant varier d'un palier à l'autre et/ou les durées de chaque palier pouvant être différentes.

Préférentiellement, pour un cycle de cuisson par paliers, la puissance des éléments chauffants des moyens de chauffage secondaires varie de manière croissante et monotone d'un palier à l'autre.

Chaque site de cuisson peut être programmé selon un cycle de cuisson différent, chaque site de cuisson pouvant être programmé consécutivement selon n'importe quel cycle de cuisson.

Selon une forme particulière de réalisation, le contrôleur commande la cuisson d'une préparation culinaire présente sur un site de cuisson selon un cycle de cuisson comprenant les étapes successives suivantes :
- régulation d'une puissance de l'élément chauffant associé au site de cuisson recevant la préparation culinaire à une première consigne de puissance, de manière à décongeler des ingrédients de la préparation culinaire,
- régulation de la puissance de l'élément chauffant associé au site de cuisson recevant la préparation culinaire à une deuxième consigne de puissance, de manière à évaporer l'eau issue de la décongélation, et
- régulation de la puissance de l'élément chauffant associé au site de cuisson recevant la préparation culinaire à une troisième consigne de puissance, de manière à cuire la préparation culinaire.

De manière préférentielle, la vitesse de rotation et/ou le sens de rotation du plateau mobile est adaptée de manière à minimiser les périodes durant lesquelles la porte est ouverte.

Par ailleurs, le contrôleur est programmé pour limiter la vitesse de rotation du plateau mobile à une vitesse inférieure à 0,2 tour/s afin de ne pas générer de flux d'air dans le four qui altérerait la cuisson des ingrédients.

Selon cette variante du deuxième aspect de l'invention, la porte du dispositif de cuisson est ouverte une seule fois pour déposer une préparation culinaire sur un site de cuisson vide et, ensuite, extraire de la chambre de cuisson une préparation culinaire dont la cuisson est terminée.

Il est ainsi possible de limiter les pertes de chaleur liées à l'ouverture de la porte et de faciliter les opérations de manutention desdites préparations culinaires par un cuisinier, ce dernier pouvant focaliser son attention sur le dépôt dans le dispositif de cuisson d'une première préparation culinaire et l'extraction d'une seconde préparation culinaire, le dispositif de cuisson lui présentant automatiquement les sites de cuisson correspondants.

Selon un troisième aspect de l'invention, il est proposé un automate pour la conception de préparations culinaires comprenant au moins une partie des éléments suivants :
- une chambre de conservation d'ingrédients utilisés pour la confection desdites préparations culinaires ;
- une station de dressage agencée d'une part pour prélever une quantité prédéterminée d'ingrédients stockés dans la chambre de conservation, et d'autre part pour déposer ladite quantité prédéterminée d'ingrédients sur un substrat d'une préparation culinaire ;
- un dispositif de cuisson de préparations culinaires conforme à l'un quelconque des modes de réalisation du premier aspect de la présente invention ;
- un système de manutention agencé pour transférer entre la station de dressage et le dispositif de cuisson au moins une des préparations culinaires dressée ;
- une unité de traitement programmée pour commander ledit automate de manière à confectionner une préparation culinaire selon une recette prédéterminée.

Selon ce troisième aspect de l'invention, le dispositif conforme à l'un quelconque des modes de réalisation du premier aspect peut s'intégrer dans un centre de conception de préparations culinaires « à la demande » et « à emporter », comme par exemple un automate pour fabriquer des pizzas. Le dispositif selon l'invention peut ainsi être intégré dans une chaine d'automatisation et permettre la cuisson simultanée de plusieurs préparations culinaires, éventuellement toutes différentes et nécessitant des temps de cuissons, des températures de cuisson et des cycles de cuisson différents, en assurant ainsi des cadences élevées de production.

Dans le cas de la fabrication de pizzas, pour lesquelles la durée moyenne de cuisson varie entre deux minutes et cinq minutes, le dispositif de cuisson selon l'un quelconque des modes de réalisation du premier aspect de l'invention permet d'obtenir un débit de l'ordre d'une pizza toutes les 30 secondes.

Suivant un quatrième aspect, il est proposé l'utilisation du dispositif de cuisson et/ou du procédé et/ou de l'automate conforme respectivement à l'un quelconque des premiers, deuxièmes ou troisièmes aspects de la présente invention ou de leurs perfectionnements pour la cuisson d'au moins une pizza dressée.

Des modes de réalisation variés de l'invention sont prévus, intégrant selon l'ensemble de leurs combinaisons possibles les différentes caractéristiques optionnelles exposées ici.

### Description des figures et des modes de réalisation

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1 représente dans une vue en perspective le dispositif de cuisson selon l'invention, dans lequel la chambre de cuisson est représentée en transparence,
- la FIGURE 2 représente dans une vue de face le dispositif de cuisson selon l'invention,
- la FIGURE 3 montre dans une vue de détail la collaboration entre le plateau mobile, les sites de cuisson et les moyens de chauffage secondaires,
- la FIGURE 4 illustre l'intégration du dispositif de cuisson selon l'invention dans un automate pour la préparation de préparations culinaires.

Les modes de réalisation qui seront décrits dans la suite ne sont nullement limitatifs ; on pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

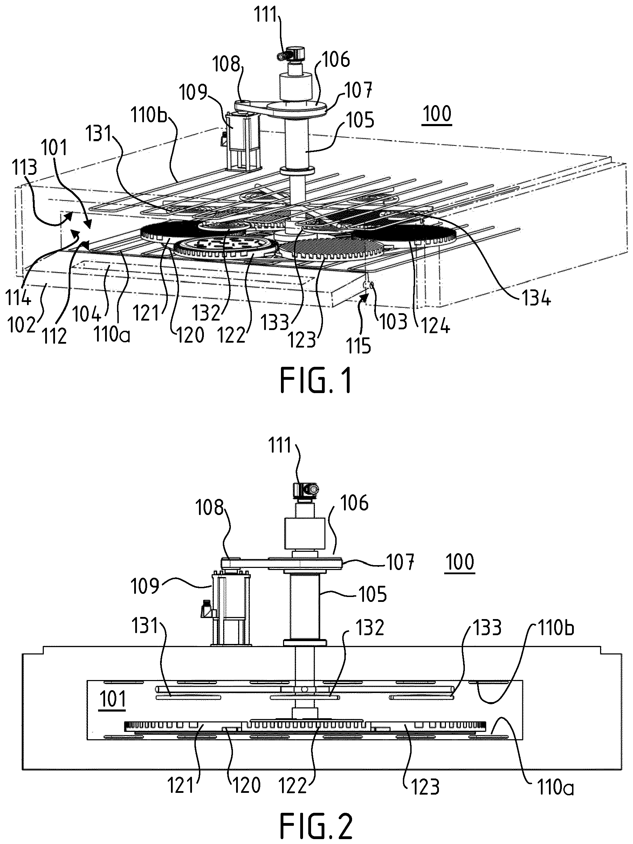

En référence aux FIGURES 1 et 2, le dispositif de cuisson 100 selon l'un quelconque des perfectionnements du premier mode de réalisation va être décrit.

Le dispositif 100 comprend une chambre de cuisson 101 à l'intérieure de laquelle des préparations culinaires peuvent être cuites. Pour ce faire, des moyens de chauffage primaires 110 sont placés à l'intérieure de ladite chambre de cuisson 101 afin de produire une puissance thermique qui est transmise auxdites préparations culinaires, par exemple par convection ou par rayonnement. Sur les FIGURES 1 et 2, deux moyens de chauffage primaires 110a et 110b sont représentés, respectivement au niveau de la surface inférieure 112 et de la surface supérieure 113 de la chambre de cuisson 101. Chaque moyen de chauffage primaire comprend une pluralité de résistances électriques qui s'étendent globalement d'une part entre les faces latérales internes 114 et 115 de la chambre de cuisson 101 et d'autre part entre les faces avant et arrière de ladite chambre 101, de manière à dissiper à l'intérieure de ladite chambre 101 une puissance thermique la plus homogène possible. Pour ce faire, comme visible sur les FIGURES 1 et 2, les résistances électriques 110a et 110b peuvent chacune être composées de résistances électriques indépendantes juxtaposées les unes à côté des autres, préférentiellement espacées de manière régulière. Alternativement, chaque moyen de chauffage primaire 110a et 110b peut consister en une seule résistance électrique s'étendant sous la forme de créneaux. Le diamètre, la longueur et le matériau de la résistance électrique est sont dimensionnés en fonction de la puissance électrique et des températures de cuisson recherchées. Typiquement, la résistance électrique est agencée pour chauffer la chambre de cuisson 101 à une température comprise entre 50°C et 400°C, et préférentiellement entre 200°C et 380°C.

Préférentiellement, les moyens de chauffages primaires 110a et 110b sont commandé par un contrôleur non représenté de manière à réguler la température à l'intérieur de la chambre de cuisson 101.

A l'intérieure de la chambre de cuisson 101, un plateau mobile 120 est positionné dans une position intermédiaire : au-dessus du moyen de chauffage primaire 110a situé sur la face inférieure 112 et en dessous de la face supérieure 113 de la chambre de cuisson.

Le plateau mobile 120 est composé d'un matériau compatible avec les températures de chauffage atteignables dans la chambre de cuisson 101, comme par exemple un alliage d'acier et/ou de la pierre réfractaire.

Selon certaines variantes de réalisation, le plateau mobile 120 peut être plein, ou ajouré afin de faciliter une ventilation - naturelle ou forcée - à l'intérieur de la chambre de cuisson.

Un arbre 105 permet de définir un axe de rotation en réalisant une liaison pivot entre le plateau mobile 120 et la chambre de cuisson 101. Eventuellement, le plateau mobile peut avoir une position réglable le long de l'arbre 105 afin d'ajuster la distance entre ledit plateau mobile 120 et le moyen de chauffage primaire 110a et/ou 110b.

Préférentiellement, le diamètre extérieur du plateau mobile 120 est inférieur ou égal à l'extension latérale du moyen de chauffage primaire, de sorte que tout point dudit plateau mobile 120 passe au-dessus et/ou en dessous d'un moyen de chauffage primaire lors de la rotation dudit plateau mobile 120.

L'arbre 105 est motorisé par l'intermédiaire d'un actionneur qui peut être de n'importe quel type. Dans le mode de réalisation illustré aux FIGURES 1 et 2, un moteur pas-à-pas 109 produit une rotation primaire autour de l'axe 108 et une courroie de transmission 107 transmet ledit mouvement de rotation à l'arbre 105 par l'intermédiaire d'un disque de transmission 106. De manière préférentielle, l'actionneur 109 est commandé par le contrôleur de manière à réguler la vitesse et/ou le sens de rotation du plateau mobile.

A l'extrémité supérieure de l'arbre 105, un codeur rotatif 111 permet de mesurer la position angulaire du moteur 109 et, *in fine,* la position angulaire du plateau mobile entrainé en rotation par ledit moteur 109. Sur la surface supérieure du plateau mobile 120, des sites de cuissons 121-126 sont disposés afin de permettre le dépôt, la cuisson et l'enlèvement de préparations culinaires. Préférentiellement, les sites de cuissons sont répartis de manière homogène autour de l'arbre 105. Dans le mode de réalisation illustré sur les FIGURES 1 et 2, six sites de cuisson 121-126 sont représentés, répartis de manière homogène, avec un angle de 60° entre les positions centrales de deux sites de cuissons adjacents.

Chaque site de cuisson 121-126 est agencé pour favoriser les échanges thermiques, notamment par conduction. Par exemple, un site de cuisson 121-126 peut être réalisé dans un matériau réfractaire compatible avec une utilisation alimentaire.

Par ailleurs, chaque site de cuisson 121-126 est agencé pour limiter l'adhérence de la préparation culinaire sur la surface supérieure de chacun desdits sites de cuisson 121-126. Dans le mode de réalisation illustré aux FIGURES 1 et 2, chaque site de cuisson 121-126 prend la forme d'un réseau unidimensionnel de créneaux périodiquement espacés. Ainsi, la surface de contact avec la préparation culinaire qui peut y être déposée est restreinte, et l'adhérence limitée. Les créneaux sont par exemple agencés pour qu'au minimum 20% de la surface inférieure de la préparation culinaire soit en contact avec le site de cuisson, et plus particulièrement avec la surface de contact dudit site de cuisson.

De plus, chaque site de cuisson 121-126 est agencé pour limiter les déplacements latéraux des préparations culinaires à la surface de chacun desdits sites de cuisson 121-126. Dans le mode de réalisation illustré aux FIGURES 1 et 2, chaque site de cuisson 121-126 a une forme de créneaux afin de permettre à la pâte - par exemple lorsqu'une pizza est cuite dans un tel dispositif de cuisson 100 - de légèrement s'affaisser entre deux créneaux consécutifs et empêcher ainsi un glissement latéral lors de la rotation du plateau mobile 120.

Une porte 102 mobile en rotation autour d'un axe 103 permet de fermer ou d'ouvrir ladite chambre de cuisson 101. La porte 102 peut comprendre aussi une surface vitrée 104 afin de permettre un contrôle visuel d'au moins une partie des sites de cuisson 121-126.

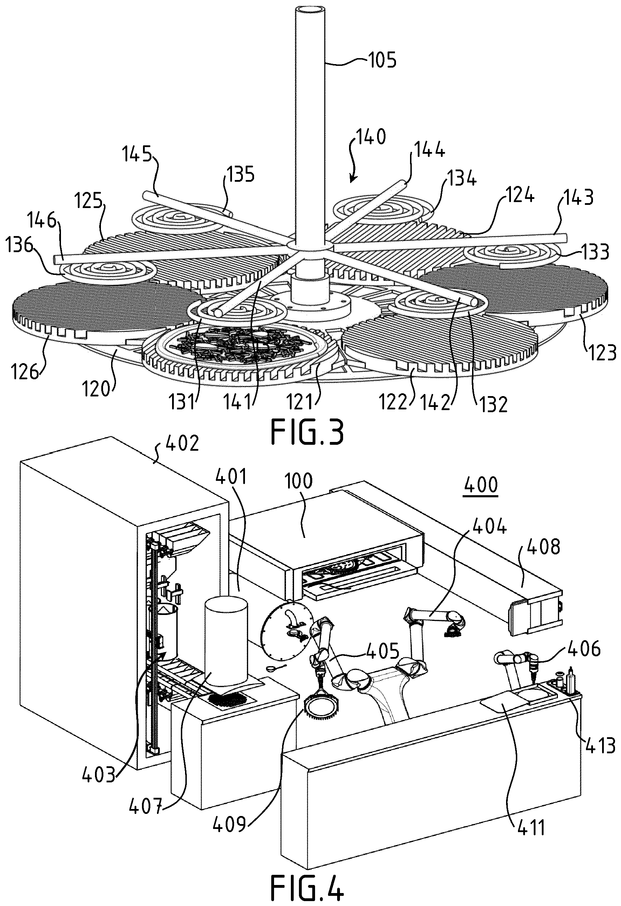

La FIGURE 3 décrit de manière plus particulière le plateau mobile 120 ainsi que les éléments chauffants des moyens de chauffage secondaires 131-136 mis en oeuvre à l'intérieur de la chambre de cuisson 101.

Les moyens de chauffage secondaires comprennent ainsi une pluralité d'éléments chauffants, chaque élément chauffant surplombant un et un seul site de cuisson 121-126, permettant ainsi d'apporter une puissance thermique localisée à la préparation culinaire correspondante, et de préférence uniquement à celle-ci. Par exemple, les éléments chauffants 131-136 peuvent être agencés pour émettre un rayonnement thermique localisé au niveau du site de cuisson 121-126 correspondant.

Typiquement, les éléments chauffants 131-136 sont situés à une distance comprise entre 3 cm et 8 cm du site de cuisson correspondant.

Sur le mode de réalisation illustré sur la FIGURE 3, les éléments chauffants 131-136 consistent en des résistances électriques prenant la forme d'une spirale. Le centre de chaque spirale est sensiblement aligné verticalement avec respectivement le centre de chaque site de cuisson correspondant. Le diamètre extérieur de chaque spirale est inférieur ou égal au diamètre extérieur de chaque site de cuisson. De manière préférentielle, afin de limiter la transmission de chaleur sur le site de cuisson adjacent, le diamètre extérieur de la spirale est strictement inférieure à celui du site de cuisson correspondant. De manière avantageuse, il est inférieur ou égal à la moitié du diamètre extérieur du site de cuisson correspondant.

Les éléments chauffants 131-136 sont supportés par une structure porteuse 140 - par exemple en étoile - dont chaque bras 141-146 permet de mettre en position l'élément chauffant correspondant dans la position définie précédemment.

Par ailleurs, la structure porteuse 140 est mobile en rotation à l'intérieur de la chambre de cuisson 101. Dans le mode de réalisation illustré sur la FIGURE 3, les moyens de chauffage secondaires sont mis en rotation par l'intermédiaire de l'arbre 105. Des connecteurs rotatifs permettent d'assurer une continuité électrique vers chaque élément chauffant 131-136.

Ainsi, même durant la rotation du plateau mobile 120 à l'intérieur de la chambre de cuisson 101, chaque élément chauffant 131-136 reste à l'aplomb du site de cuisson correspondant 121-126.

Dans le cas où la structure porteuse 140 est mise en rotation par un arbre moteur différent de celui mettant en rotation le plateau mobile 120, alors le contrôleur est avantageusement programmé pour synchroniser les vitesses de rotation de l'un et de l'autre de manière à conserver cet alignement.

La FIGURE 4 décrit l'utilisation d'un dispositif selon l'un quelconque des perfectionnements du premier aspect de l'invention dans un système 400 de conception automatique de préparations culinaires, et plus particulièrement de pizzas.

Selon un troisième aspect de l'invention, le dispositif de cuisson 100 peut être intégré à un automate 400 réalisant la conception, la cuisson, et/ou l'emballage et/ou la livraison de préparations culinaires, et particulièrement de pizzas.

Ainsi, un tel automate 400 peut comprendre :
- une chambre 402 de conservation d'ingrédients aptes à être utilisés pour la confection desdites préparations culinaires ;
- une station de dressage 403 agencée d'une part pour prélever une quantité prédéterminée d'ingrédients stockés dans la chambre de conservation, et d'autre part pour déposer ladite quantité prédéterminée d'ingrédients sur un substrat d'une préparation culinaire ;
- un dispositif de cuisson 100 de préparations culinaires selon l'un quelconque des modes de réalisation conformes au premier aspect de l'invention ;
- un système de manutention 404-406 agencé pour transférer entre la station de dressage 403 et le dispositif de cuisson 100, au moins une des préparations culinaires dressée ;
- une unité de traitement (non représentée) programmée pour commander ledit automate 400 de manière à confectionner une préparation culinaire selon une recette prédéterminée.

Pour faciliter la compréhension, un exemple va être donné pour la préparation d'une pizza, l'automate 400 étant cependant agencé pour confectionner une large variété de préparations culinaires, comme évoqué précédemment.

Dans l'exemple illustré sur la FIGURE 4, l'automate 400 comprend par ailleurs un réservoir à pâte fraîche 401, un dispositif de formage 407 pour abaisser la pâte utilisée pour la confection de ladite pizza, et un distributeur de cartons 408. Le système de manutention mis en oeuvre comprend notamment trois bras robotisés multiaxes 404-406. Ces bras robotisés sont agencés pour manipuler la pizza en cours de confection, par exemple par l'intermédiaire d'une pelle 409 (plate), et pour la transférer d'un poste à un autre.

Ainsi, au cours d'une première étape, une quantité prédéterminée de pâte - de préférence fraîche - est extraite du réservoir 401. Cette quantité prédéterminée est dimensionnée de manière à pouvoir être abaissée aux dimensions souhaitées d'une pizza.

Pour ce faire, la quantité prédéterminée de pâte fraîche est transférée vers le dispositif de formage 407 qui donne à ladite quantité prédéterminée de pâte fraîche la forme souhaitée, dite abaissée, de la pâte sur laquelle la pizza sera confectionnée.

Eventuellement, une sauce (par exemple tomate ou à base de crème) est déversée et étalée afin de préparer le substrat.

Ensuite, la pâte ainsi préparée est transférée vers la station de dressage 403 vers laquelle des ingrédients prédéterminés seront déposés. Ces ingrédients sont prélevés dans des quantités prédéterminées depuis la chambre de conservation 402.

De manière préférentielle le dépôt desdits ingrédients est réalisé de manière aléatoire et homogène à la surface de la pizza.

Ensuite, la pizza est transférée vers le dispositif de cuisson 100 selon l'invention.

En fonction de l'occupation des sites de cuisson, l'unité de traitement détermine la meilleure stratégie pour placer une pizza « à cuire » dans le dispositif de cuisson. Pour ce faire, il détermine notamment les paramètres de vitesse de rotation du plateau tournant et/ou des moyens de chauffage secondaires, et/ou leur sens de rotation, et/ou la position des sites de cuisson vides.

Préférentiellement, l'ouverture de la porte est synchronisée avec la rotation du plateau tournant, de sorte que celle-ci soit ouverte durant un laps de temps le plus court possible, par exemple lorsque le site de cuisson sur lequel la pizza transportée doit être déposée arrive à proximité de la porte.

Dans le cas où la porte est motorisée, le moteur d'ouverture de la porte est commandé pour réaliser ladite ouverture.

Selon un mode de réalisation complémentaire ou alternatif, l'un des bras robotisés peut ouvrir la porte du four par l'intermédiaire d'une poignée par exemple.

En fonction du type de pizza enfournée, les paramètres de cuisson sont déterminés. Ces paramètres comprennent notamment au moins une durée et au moins un cycle de puissance. Un cycle de cuisson peut comprendre plusieurs paliers de cuisson variables ou constants.

Le moyen de chauffage primaire et/ou les moyens de chauffage secondaires sont commandés de manière à garantir une cuisson optimale de la pizza.

De manière préférentielle, seul le moyen de chauffage primaire est commandé afin de fournir au moins une puissance thermique durant au moins une certaine durée de manière à chauffer au moins partiellement la pizza.

Chaque site de cuisson peut être commandé selon un cycle de cuisson particulier, de manière indépendante des autres sites de cuisson.

Lorsque la cuisson d'une pizza arrive bientôt à échéance, l'unité de traitement détermine la meilleure stratégie pour minimiser le temps d'ouverture de la porte et garantir le respect du temps de cuisson optimal de ladite pizza. Eventuellement, une marge d'erreur de +/- 10 secondes est tolérée par rapport au temps de cuisson nominal.

Pour ce faire, le site de cuisson sur lequel la pizza est bientôt cuite est amené à proximité de la porte. La porte est ouverte durant un laps de temps le plus court possible, et durant lequel le bras robotisé 404 saisit ladite pizza à l'aide de la pelle 409.

Le bras robotisé 404 dépose alors la pizza ainsi cuite sur un poste de conditionnement 413 afin qu'elle soit déposée dans un carton 411 par exemple, et éventuellement découpée, éventuellement assaisonnée.

## Revendications

1. Dispositif de cuisson de préparations culinaires comprenant :
- une chambre de cuisson (101), apte à accueillir simultanément plusieurs préparations culinaires individuelles,
- un moyen de chauffage primaire (110a, 110b), agencé pour délivrer une puissance thermique dite primaire permettant de chauffer la chambre de cuisson (101),
- un plateau mobile (120), apte à se déplacer à l'intérieur de la chambre de cuisson (101), et comprenant une pluralité de sites de cuisson (121-126), chacun étant agencé pour recevoir une préparation culinaire, le dispositif étant **caractérisé en ce qu'**il comprend en outre :
- des moyens de chauffage secondaires, comportant une pluralité d'éléments chauffants (131-136), situés au dessus du plateau mobile (120), mobiles à l'intérieur de la chambre de cuisson (101) et agencés pour suivre un déplacement du plateau mobile (120), chaque élément chauffant (131-136) étant associé à l'un des sites de cuisson (121-126) et étant agencé pour délivrer une puissance thermique dite secondaire permettant de chauffer préférentiellement le dessus de ce site de cuisson.

2. Dispositif selon la revendication 1, **caractérisé en ce qu'**il comprend par ailleurs un contrôleur programmé pour réguler séparément le moyen de chauffage primaire (110a, 110b) et chaque élément chauffant (131-136) des moyens de chauffage secondaires.

3. Dispositif selon la revendication précédente, **caractérisé en ce que** le contrôleur est programmé pour que, au cours d'un cycle de cuisson d'une préparation culinaire, une puissance de l'élément chauffant (131-136) associé au site de cuisson (121-126) recevant la préparation culinaire soit régulée de manière à successivement décongeler des ingrédients de la préparation culinaire, évaporer l'eau issue de la décongélation et cuire la préparation culinaire.

4. Dispositif selon l'une quelconque des revendications 2 et 3, **caractérisé en ce qu'**il comprend par ailleurs une pluralité de capteurs de température, chaque capteur de température étant associé à un site de cuisson (121-126) et étant agencé pour mesurer une température, dite locale, au voisinage de ce site de cuisson, le contrôleur étant programmé pour réguler l'élément chauffant (131-136) associé au site de cuisson en fonction de ladite température locale.

5. Dispositif selon l'une quelconque des revendications 2 à 4, **caractérisé en ce qu'**il comprend par ailleurs un capteur de température agencé pour mesurer une température, dite d'ensemble, au sein de la chambre de cuisson (101), le contrôleur étant programmé en outre pour réguler la puissance thermique du moyen de chauffage primaire (110a, 110b) en fonction de la température d'ensemble.

6. Dispositif selon l'une quelconque des revendications 2 à 5, **caractérisé en ce que** le contrôleur est en outre programmé pour réguler la puissance thermique de chaque élément chauffant (131-136) des moyens de chauffage secondaires en fonction de la préparation culinaire déposée sur le site de cuisson associé (121-126).

7. Dispositif selon l'une quelconque des revendications 2 à 6, **caractérisé en ce qu'**il comprend par ailleurs une porte (102) motorisée, le contrôleur étant programmé en outre pour contrôler l'ouverture et la fermeture de la porte motorisée.

8. Dispositif selon la revendication précédente, **caractérisé en ce que** le contrôleur est programmé en outre pour adapter la vitesse de rotation et/ou le sens de rotation du plateau mobile (120) et/ou pour réguler le moyen de chauffage primaire (110a, 110b) et/ou les éléments chauffants (131-136) des moyens de chauffage secondaires, afin de présenter l'un des sites de cuisson (121-126) à proximité de la porte (102) à la fin d'un cycle de cuisson de la préparation culinaire accueillie par ledit site de cuisson.

9. Dispositif selon la revendication 8, **caractérisé en ce que** le contrôleur est programmé en outre pour présenter un site de cuisson vide à proximité de la porte (102) avant son ouverture et en adaptant la vitesse et/ou le sens de rotation du plateau mobile (120).

10. Dispositif selon l'une quelconque des revendications 8 et 9, **caractérisé en ce que** le contrôleur est programmé en outre pour déterminer le site de cuisson vide le plus proche du site de cuisson dont la préparation culinaire est la prochaine à atteindre la fin d'un cycle de cuisson et adapter la vitesse de rotation et/ou le sens de rotation du plateau mobile (120) de manière à minimiser la durée durant laquelle la porte (102) est ouverte.

11. Dispositif selon l'une quelconque des revendications précédentes, **caractérisé en ce que** le plateau mobile (120) est entrainé en rotation dans la chambre de cuisson (101) par le biais d'un axe de rotation et d'un moteur d'entrainement (109).

12. Dispositif selon l'une quelconque des revendications précédentes, **caractérisé en ce que** chaque site de cuisson (121-126) est agencé pour limiter l'adhérence de la préparation culinaire lors de la cuisson.

13. Dispositif selon la revendication précédente, **caractérisé en ce que** chaque site de cuisson (121-126) présente une surface d'accueil discontinue s'étendant en saillie par rapport au plateau mobile (120) et sur laquelle la préparation culinaire peut être déposée.

14. Procédé de cuisson d'au moins une préparation culinaire dans un dispositif de cuisson (100) selon l'une quelconque des revendications précédentes, **caractérisé en ce qu'**il comprend au moins une itération des étapes suivantes :
- dépôt d'une préparation culinaire sur un site de cuisson libre (121-126) du plateau mobile (120);
- commande de l'élément chauffant (131-136) du moyen de chauffage secondaire associé au site de cuisson (121-126) en fonction d'un cycle de cuisson dépendant de la préparation culinaire déposée, le cycle de cuisson étant défini par au moins une puissance de chauffage et au moins une durée;
- à un instant dit d'extraction, situé dans un intervalle compris entre cinq et soixante secondes de la fin du cycle de cuisson:
▪ rotation du plateau mobile (120) de manière à présenter le site de cuisson (121-126) à proximité de la porte (102) ;
▪ extraction de la préparation culinaire.

15. Procédé selon la revendication précédente, **caractérisé en ce que**, lorsqu'une préparation culinaire supplémentaire doit être cuite dans le dispositif de cuisson (100), les étapes suivantes sont effectuées :
- identification d'un premier site de cuisson (121-126) sur lequel une préparation culinaire est sur le point de terminer son cycle de cuisson ;
- sélection d'un second site de cuisson vide (121-126) le plus proche du premier site de cuisson;
- rotation du plateau mobile (120) de manière à présenter à proximité de la porte (102) le second site de cuisson (121-126) sélectionné ;
- dépôt de la préparation culinaire supplémentaire sur le second site de cuisson sélectionné ;
- rotation du plateau mobile (120) de manière à présenter à proximité de la porte (102) le premier site de cuisson, ladite préparation culinaire terminant son cycle de cuisson pendant ladite rotation ;
- extraction de la préparation culinaire située sur le premier site de cuisson.

16. Procédé selon l'une quelconque des revendications 14 ou 15, **caractérisé en ce que** le contrôleur commande la cuisson d'une préparation culinaire présente sur un site de cuisson (121-126) selon un cycle de cuisson comprenant les étapes successives suivantes :
- régulation d'une puissance de l'élément chauffant (131-136) associé au site de cuisson (121-126) recevant la préparation culinaire à une première consigne de puissance, de manière à décongeler des ingrédients de la préparation culinaire,
- régulation de la puissance de l'élément chauffant (131-136) associé au site de cuisson (121-126) recevant la préparation culinaire à une deuxième consigne de puissance, de manière à évaporer l'eau issue de la décongélation, et
- régulation de la puissance de l'élément chauffant (131-136) associé au site de cuisson (121-126) recevant la préparation culinaire à une troisième consigne de puissance, de manière à cuire la préparation culinaire.

17. Procédé selon l'une quelconque des revendications 14 à 16, **caractérisé en ce que** la vitesse de rotation du plateau mobile (120) est adaptée de manière à minimiser les périodes durant lesquelles la porte (102) est ouverte.

18. Automate pour la conception de préparations culinaires comprenant :
- une chambre (402) de conservation d'ingrédients aptes à être utilisés pour la confection desdites préparations culinaires ;
- une station de dressage (403) agencée d'une part pour prélever une quantité prédéterminée d'ingrédients stockés dans la chambre de conservation (402), et d'autre part pour déposer ladite quantité prédéterminée d'ingrédients sur un substrat d'une préparation culinaire ;
- un dispositif de cuisson (100) de préparations culinaires selon l'une quelconque des revendications 1 à 13 ;
- un système de manutention (404-406) agencé pour transférer entre la station de dressage (403) et le dispositif de cuisson (100) au moins une des préparations culinaires dressée ;
- une unité de traitement programmée pour commander ledit automate (400) de manière à confectionner une préparation culinaire selon une recette prédéterminée.

19. Utilisation du dispositif (100) selon l'une quelconque des revendications 1 à 13 pour la cuisson d'au moins une pizza dressée.

## Patentansprüche

1. Vorrichtung zum Garen von Speisezubereitungen, enthaltend:
- einen Garraum (101), der dazu geeignet ist, gleichzeitig mehrere einzelne Speisezubereitungen aufzunehmen,
- eine primäre Heizeinrichtung (110a, 110b), die dazu angeordnet ist, eine sogenannte primäre Wärmeleistung bereitzustellen, mit welcher der Garraum (101) erhitzt werden kann,
- eine bewegliche Platte (120), die dazu geeignet ist, sich innerhalb des Garraums (101) zu verlagern, und die eine Mehrzahl von Garstellen (121 - 126) aufweist, die jeweils dazu angeordnet sind, eine Speisezubereitung aufzunehmen,
wobei die Vorrichtung **dadurch gekennzeichnet ist, dass** sie ferner das Folgende enthält:
- sekundäre Heizeinrichtungen mit einer Mehrzahl von Heizelementen (131
- 136), die sich oberhalb der beweglichen Platte (120) befinden, innerhalb des Garraums (101) beweglich und dazu angeordnet sind, einer Verlagerung der beweglichen Platte (120) zu folgen, wobei jedes Heizelement (131 - 136) einer der Garstellen (121 - 126) zugeordnet und dazu vorgesehen ist, eine sogenannte sekundäre Wärmeleistung bereitzustellen, mit welcher vorzugsweise die Oberseite dieser Garstelle erhitzt werden kann.

2. Vorrichtung nach Anspruch 1,
**dadurch gekennzeichnet, dass** sie ferner eine Steuereinrichtung enthält, die dazu programmiert ist, die primäre Heizeinrichtung (110a, 110b) und jedes Heizelement (131 - 136) der sekundären Heizeinrichtungen separat zu regeln.

3. Vorrichtung nach dem vorangehenden Anspruch,
**dadurch gekennzeichnet, dass** die Steuereinrichtung dazu programmiert ist, im Laufe eines Garzyklus einer Speisezubereitung eine Leistung des Heizelements (131 - 136), das der die Speisezubereitung aufnehmenden Garstelle (121 - 126) zugeordnet ist, so zu regeln, dass nacheinander die Zutaten der Speisezubereitung aufgetaut werden, das beim Auftauen entstehende Wasser verdampft wird und die Speisezubereitung gegart wird.

4. Vorrichtung nach einem der Ansprüche 2 und 3,
**dadurch gekennzeichnet, dass** sie ferner eine Mehrzahl von Temperatursensoren enthält, wobei jeder Temperatursensor einer Garstelle (121 - 126) zugeordnet und dazu angeordnet ist, eine sogenannte Umgebungstemperatur in der Nähe dieser Garstelle zu messen, wobei die Steuereinrichtung dazu programmiert ist, das der Garstelle zugeordnete Heizelement (131 -136) in Abhängigkeit von der Umgebungstemperatur zu regeln.

5. Vorrichtung nach einem der Ansprüche 2 bis 4,
**dadurch gekennzeichnet, dass** sie ferner einen Temperatursensor enthält, der dazu angeordnet ist, eine sogenannte Gesamttemperatur innerhalb des Garraums (101) zu messen, wobei die Steuereinrichtung ferner dazu programmiert ist, die Wärmeleistung der primären Heizeinrichtung (110a, 110b) in Abhängigkeit von der Gesamttemperatur zu regeln.

6. Vorrichtung nach einem der Ansprüche 2 bis 5,
**dadurch gekennzeichnet, dass** die Steuereinrichtung ferner dazu programmiert ist, die Wärmeleistung jedes Heizelements (131 - 136) der sekundären Heizeinrichtungen in Abhängigkeit von der Speisezubereitung zu regeln, die auf der zugeordneten Garstelle (121 - 126) abgelegt ist.

7. Vorrichtung nach einem der Ansprüche 2 bis 6,
**dadurch gekennzeichnet, dass** sie ferner eine motorisch angetriebene Tür (102) enthält, wobei die Steuereinrichtung ferner dazu programmiert ist, das Öffnen und Schließen der motorisch angetriebenen Tür zu steuern.

8. Vorrichtung nach dem vorangehenden Anspruch,
**dadurch gekennzeichnet, dass** die Steuereinrichtung ferner dazu programmiert ist, die Drehzahl und/oder Drehrichtung der beweglichen Platte (120) anzupassen und/oder die primäre Heizeinrichtung (110a, 110b) und/oder die Heizelemente (131 - 136) der sekundären Heizeinrichtungen zu regeln, um eine der Garstellen (121 - 126) am Ende eines Garzyklus der von der Garstelle aufgenommenen Speisezubereitung in der Nähe der Tür (102) vorzulegen.

9. Vorrichtung nach Anspruch 8,
**dadurch gekennzeichnet, dass** die Steuereinrichtung ferner dazu programmiert ist, eine leere Garstelle in der Nähe der Tür (102) vor deren Öffnen und unter Anpassung der Drehzahl und/oder -Richtung der beweglichen Platte (120) vorzulegen.

10. Vorrichtung nach einem der Ansprüche 8 und 9,
**dadurch gekennzeichnet, dass** die Steuereinrichtung ferner dazu programmiert ist, die leere Garstelle zu bestimmen, die derjenigen Garstelle am nächsten liegt, deren Speisezubereitung die nächste ist, die das Ende eines Garzyklus erreicht, und die Drehzahl und/oder Drehrichtung der beweglichen Platte (120) so anzupassen, das die Zeitdauer, während der die Tür (102) geöffnet ist, minimiert wird.

11. Vorrichtung nach einem der vorangehenden Ansprüche,
**dadurch gekennzeichnet, dass** die bewegliche Platte (120) über eine Drehachse und einen Antriebsmotor (109) in dem Garraum (101) drehend angetrieben wird.

12. Vorrichtung nach einem der vorangehenden Ansprüche,
**dadurch gekennzeichnet, dass**
jede Garstelle (121 - 126) dazu angeordnet ist, die Anhaftung der Speisezubereitung beim Garen zu begrenzen.

13. Vorrichtung nach dem vorangehenden Anspruch,
**dadurch gekennzeichnet, dass** jede Garstelle (121 - 126) eine unterbrochene Aufnahmefläche aufweist, die sich bezüglich der beweglichen Platte (120) vorspringend erstreckt und auf welcher die Speisezubereitung abgelegt werden kann.

14. Verfahren zum Garen zumindest einer Speisezubereitung in einer Garvorrichtung (100) nach einem der vorangehenden Ansprüche, **dadurch gekennzeichnet, dass** es zumindest eine Iteration der nachstehenden Schritte umfasst:
- Ablegen einer Speisezubereitung auf einer freien Garstelle (121 - 126) der beweglichen Platte (120);
- Steuern des Heizelements (131 - 136) der der Garstelle (121 - 126) zugeordneten sekundären Heizeinrichtung in Abhängigkeit von einem von der abgelegten Speisezubereitung abhängigen Garzyklus, wobei der Garzyklus von zumindest einer Heizleistung und zumindest einer Zeitdauer definiert wird;
- zu einem sogenannten Entnahmezeitpunkt, der in einem Zeitintervall zwischen fünf und sechzig Sekunden nach Beendigung des Garzyklus liegt:
▪ Drehen der beweglichen Platte (120) derart, dass die Garstelle (121 - 126) in der Nähe der Tür (102) vorgelegt wird;
▪ Entnehmen der Speisezubereitung.

15. Verfahren nach dem vorangehenden Anspruch,
**dadurch gekennzeichnet, dass** dann, wenn eine weitere Speisezubereitung in der Garvorrichtung (100) gegart werden soll, die nachstehenden Schritte erfolgen:
- Identifizieren einer ersten Garstelle (121 - 126), bei der eine Speisezubereitung kurz davor ist, ihren Garzyklus zu beenden;
- Auswählen einer leeren zweiten Garstelle (121 - 126), die der ersten Garstelle am nächsten liegt;
- Drehen der beweglichen Platte (120) so, dass die ausgewählte zweite Garstelle (121 - 126) in der Nähe der Tür (102) vorgelegt wird;
- Ablegen der weiteren Speisezubereitung auf der ausgewählten zweiten Garstelle;
- Drehen der beweglichen Platte (120) so, dass die erste Garstelle in der Nähe der Tür (102) vorgelegt wird, wobei die Speisezubereitung während der Drehung ihren Garzyklus beendet;
- Entnehmen der auf der ersten Garstelle befindlichen Speisezubereitung.

16. Verfahren nach einem der Ansprüche 14 oder 15,
**dadurch gekennzeichnet, dass** die Steuereinrichtung das Garen einer auf einer Garstelle (121 - 126) vorhandenen Speisezubereitung gemäß einem Garzyklus steuert, der die nachstehenden aufeinanderfolgenden Schritte umfasst:
- Regeln einer Leistung des Heizelements (131 - 136), das der die Speisezubereitung aufnehmenden Garstelle (121 - 126) zugeordnet ist, auf einen ersten Leistungssollwert, so dass die Zutaten der Speisezubereitung aufgetaut werden,
- Regeln der Leistung des Heizelements (131 - 136), das der die Speisezubereitung aufnehmenden Garstelle (121 - 126) zugeordnet ist, auf einen zweiten Leistungssollwert, so dass das beim Auftauen entstehende Wasser verdampft wird, und
- Regeln der Leistung des Heizelements (131 - 136), das der die Speisezubereitung aufnehmenden Garstelle (121 - 126) zugeordnet ist, auf einen dritten Leistungssollwert, so dass die Speisezubereitung gegart wird.

17. Verfahren nach einem der Ansprüche 14 bis 16,
**dadurch gekennzeichnet, dass** die Drehzahl der beweglichen Platte (120) so angepasst wird, dass die Zeitdauern, während der die Tür (102) geöffnet ist, minimiert werden.

18. Automat für die Zusammenstellung von Speisezubereitungen, enthaltend:
- eine Kammer (402) zum Aufbewahren von Zutaten, die dazu geeignet sind, zur Zusammenstellung dieser Speisezubereitungen verwendet zu werden;
- eine Anfertigungsstation (403), die dazu angeordnet ist, einerseits eine vorbestimmte Menge von in der Aufbewahrungskammer (402) gelagerten Zutaten zu entnehmen und andererseits die vorbestimmte Menge von Zutaten auf eine Unterlage einer Speisezubereitung aufzubringen;
- eine Garvorrichtung (100) zum Garen von Speisezubereitungen nach einem der Ansprüche 1 bis 13;
- ein Handhabungssystem (404 - 406), das dazu angeordnet ist, zumindest eine der angefertigten Speisezubereitungen zwischen der Anfertigungsstation (403) und der Garvorrichtung (100) zu überführen;
- eine Verarbeitungseinheit, die dazu programmiert ist, den Automaten (400) so zu steuern, dass eine Speisezubereitung nach einem vorbestimmten Rezept hergestellt wird.

19. Verwendung der Vorrichtung (100) nach einem der Ansprüche 1 bis 13 zum Garen zumindest einer angefertigten Pizza.

## Claims

1. Cooking device for culinary preparations comprising:
- a cooking chamber (101), capable of simultaneously receiving several individual culinary preparations,
- a primary heating means (110a, 110b), arranged in order to deliver a thermal power called primary thermal power, making it possible to heat the cooking chamber (101),
- a moveable plate (120), capable of being displaced inside the cooking chamber (101), and comprising a plurality of cooking sites (121-126), each being arranged in order to receive a culinary preparation,
said device being **characterized in that** it further comprises secondary heating means, comprising a plurality of heating elements (131-136), situated above the a moveable plate (120), moveable inside the cooking chamber (101) and arranged in order to follow a displacement of the moveable plate (120), each heating element (131-136) being associated with one of the cooking sites (121-126) and being arranged in order to deliver a thermal power called secondary thermal power making it possible to heat preferentially the top of this cooking site.

2. Device according to claim 1, **characterized in that** it also comprises a controller programmed in order to regulate separately the primary heating means (110a, 110b) and each heating element (131-136) of the secondary heating means.

3. Device according to the preceding claim, **characterized in that** the controller is programmed so that, in the course of a cooking cycle of a culinary preparation, a power of the heating element (131-136) associated with the cooking site (121-126) receiving the culinary preparation is regulated so as to successively defrost ingredients of the culinary preparation, evaporate the water resulting from the defrosting and cook the culinary preparation.

4. Device according to either one of claims 2 and 3, **characterized in that** it also comprises a plurality of temperature sensors, each temperature sensor being associated with a cooking site (121-126) and being arranged in order to measure a temperature, called local temperature, in the vicinity of this cooking site, the controller being programmed in order to regulate the heating element (131-136) associated with the cooking site as a function of said local temperature.

5. Device according to any one of claims 2 to 4, **characterized in that** it also comprises a temperature sensor arranged in order to measure a temperature, called overall temperature, within the cooking chamber (101), the controller also being programmed in order to regulate the thermal power of the primary heating means (110a, 110b) as a function of the overall temperature.

6. Device according to any one of claims 2 to 5, **characterized in that** the controller is also programmed in order to regulate the thermal power of each heating element (131-136) of the secondary heating means as a function of the culinary preparation loaded on the associated cooking site (121-126).

7. Device according to any one of claims 2 to 6, **characterized in that** it also comprises a motorized door (102), the controller also being programmed in order to control the opening and closing of the motorized door.

8. Device according to the preceding claim, **characterized in that** the controller is also programmed in order to adapt the speed of rotation and/or the direction of rotation of the moveable plate (120) and/or in order to regulate the primary heating means (110a, 110b) and/or the heating elements (131-136) of the secondary heating means, in order to present one of the cooking sites (121-126) in proximity to the door (102) at the end of a cooking cycle of the culinary preparation received by said cooking site.

9. Device according to claim 8, **characterized in that** the controller is also programmed in order to present a vacant cooking site in proximity to the door (102) before the opening thereof and adapting the speed and/or the direction of rotation of the moveable plate (120).

10. Device according to any one of claims 8 and 9, **characterized in that** the controller is also programmed in order to determine the vacant cooking site that is the closest to the cooking site the culinary preparation of which is the next one to reach the end of a cooking cycle and adapt the speed of rotation and/or the direction of rotation of the moveable plate (120) so as to minimize the time during which the door (102) is open.

11. Device according to any one of the preceding claims, **characterized in that** the moveable plate (120) is driven in rotation in the cooking chamber (101) by means of a rotation shaft and a drive motor (109).

12. Device according to any one of the preceding claims, **characterized in that** each cooking site (121-126) is arranged in order to limit sticking of the culinary preparation during cooking.

13. Device according to the preceding claim, **characterized in that** each cooking site (121-126) has a discontinuous reception surface extending as a projection with respect to the moveable plate (120) and on which the culinary preparation can be loaded.

14. Method for cooking at least one culinary preparation in a cooking device (100) according to any one of the preceding claims, **characterized in that** it comprises at least one iteration of the following steps:
- loading a culinary preparation on a free cooking site (121-126) of the moveable plate (120);
- controlling the heating element (131-136) of the secondary heating means associated with the cooking site (121-126) as a function of a cooking cycle depending on the culinary preparation loaded thereon, the cooking cycle being defined by at least one heating power and at least one duration;
- at a moment called moment of extraction, situated within an interval comprised between five and sixty seconds from the end of the cooking cycle:
▪ rotating the moveable plate (120) so as to present the cooking site (121-126) in proximity to the door (102);
▪ extracting the culinary preparation.

15. Method according to the preceding claim, **characterized in that**, when an additional culinary preparation is to be cooked in the cooking device (100), the following steps are carried out:
- identifying a first cooking site (121-126) on which a culinary preparation is on the point of ending its cooking cycle;
- selecting a second vacant cooking site (121-126) that is the closest to the first cooking site;
- rotating the moveable plate (120) so as to present the selected second cooking site (121-126) in proximity to the door (102);
- loading the additional culinary preparation on the selected second cooking site;
- rotating the moveable plate (120) so as to present the first cooking site in proximity to the door (102), said culinary preparation ending its cooking cycle during said rotation;
- extracting the culinary preparation situated on the first cooking site.

16. Method according to any one of claims 14 or 15, **characterized in that** the controller controls the cooking of a culinary preparation present on a cooking site (121-126) according to a cooking cycle comprising the following successive steps:
- regulating a power of the heating element (131-136) associated with the cooking site (121-126) receiving the culinary preparation at a first power set point, so as to defrost ingredients of the culinary preparation,
- regulating the power of the heating element (131-136) associated with the cooking site (121-126) receiving the culinary preparation at a second power set point, so as to evaporate the water resulting from the defrosting, and
- regulating the power of the heating element (131-136) associated with the cooking site (121-126) receiving the culinary preparation at a third power set point, so as to cook the culinary preparation.

17. Method according to any one of claims 14 to 16, **characterized in that** the speed of rotation of the moveable plate (120) is adapted so as to minimize the periods during which the door (102) is open.

18. Automated machine for the design of culinary preparations comprising:
- a storage chamber (402) for ingredients suitable for use for preparing said culinary preparations;
- an assembly station (403) arranged on the one hand for picking a predetermined quantity of ingredients stored in the storage chamber (402), and on the other hand for placing said predetermined quantity of ingredients on a substrate of a culinary preparation;
- a cooking device (100) for culinary preparations according to any one of claims 1 to 13;
- a handling system (404-406) for transferring at least one of the assembled culinary preparations between the assembly station (403) and the cooking device (100);
- a processor unit programmed in order to control said automated machine (400) so as to prepare a culinary preparation following a predetermined recipe.

19. Utilization of the device (100) according to any one of claims 1 to 13 for cooking at least one assembled pizza.
